# EUROPEAN PATENT SPECIFICATION

(11) **EP 3 229 130 B1**
(45) Date of publication and mention of the grant of the patent: **13.11.2019**
(21) Application number: 15865540.7
(22) Date of filing: 01.04.2015
(51) Int. Cl.: H04M 1/725, H04M 1/67, G06F 8/38, G06F 9/451, H04Q 3/545

(54) **SMART TERMINAL INFORMATION DISPLAY METHOD AND SMART TERMINAL**
INFORMATIONSANZEIGEVERFAHREN FÜR INTELLIGENTES ENDGERÄT SOWIE INTELLIGENTES ENDGERÄT
PROCÉDÉ D'AFFICHAGE D'INFORMATIONS DE TERMINAL INTELLIGENT ET TERMINAL INTELLIGENT

(30) Priority: 04.12.2014 CN 201410742777
(43) Date of publication of application: 11.10.2017
(73) Proprietor: JRD Communication Inc., Shenzhen, Guangdong 518057 (CN)
(72) Inventor: TANG, Xiangdong, Shenzhen Guangdong (CN)
(74) Representative: Brachmann, Roland W.
(86) International application number: PCT/CN2015/075655
(87) International publication number: WO 2016/086558

(56) References cited:
- CN-A- 102 411 465
- CN-A- 103 729 122
- US-A1- 2007 150 826
- US-A1- 2012 129 496
- US-A1- 2013 283 199
- Julie Clover: "Hands-On With Apple's New Tips App in iOS 8 Beta 4 - Mac Rumors", , 21 July 2014 (2014-07-21), XP055485556, Retrieved from the Internet: URL:https://www.macrumors.com/2014/07/21/h ands-on-with-tips-app/ [retrieved on 2018-06-19]

## Description

The present invention relates to the field of mobile communications technologies, and in particular relates to a smart terminal information display method and a smart terminal. Mobile terminals are small in size and easy to carry, and have become an indispensable item of daily use for more and more users. According to the statistics, mobile terminal users have exceeded 700 million in China. Along with the rapid growth of the mobile Internet over recent years, smart terminals have advantages such as connection to the Internet at any time to acquire information, and cell phones have gradually become a necessity in people's daily lives. As wireless communication technologies have been developed, and as wireless communication fees and cell phone prices continuously decrease, on the other hand, data services through cell phones are more and more, which continuously enriches people's life.

As people become more and more dependent on smart terminals, increasingly plentiful functions have become the focus of competition among all major vendors, and types of smart terminals are continuously updated. However, users typically are not very clear of the new functions developed by vendors with tremendous effort. For example, users don't know functions of some smart terminals, such as standby or wakeup by double tapping on the touch screen or machine wakeup by voice. As a result, this is undoubtedly a loss of experience for the users.

A lock screen showing tips on how to efficiently use functions of a smart phone is e.g. implemented in the iOS 8 operating system.

The technical problem that the present invention primarily solves is to provide a smart terminal information display method and a smart terminal, such that users can clearly understand a new function of the smart terminal and a use method thereof.

This problem is solved according to the features of the independent claims. Further embodiments result from the depending claims.

To solve the above technical problem, one technical solution according to the present invention is as follows: a smart terminal information display method is provided, comprising:
the smart terminal detecting an inputted locking event to lock its screen;
responding to the locking event and displaying the information containing a list of specific functions on the screen;
receiving and executing a selection command on the list;
displaying a brief introduction and use method of the specific function corresponding to the selection command on the screen;
determining whether to read the information containing the specific function and the use method; if yes, entering the locking screen interface when reading the specific function and the use method displayed on the screen is completed; otherwise, turning off the interface displaying the information and entering the locking screen.

According to an embodiment, the step of entering the locking screen interface when reading the specific function and the use method displayed on the screen is completed is specifically:
the smart terminal detecting the locking event to lock its screen that is inputted again so as to confirm that the reading the specific function and the use method displayed on the screen is completed; and
entering the locking screen interface.

According to an embodiment, the locking event comprises triggering the power button of the smart terminal.

To solve the above technical problem, another technical solution according to the present invention is as follows: a smart terminal information display method is provided, comprising:
the smart terminal detecting an inputted locking event to lock its screen;
responding to the locking event and displaying the information containing the specific function and the use method on the screen; and
entering the locking screen interface.

According to an embodiment, prior to the step of entering the locking screen interface, the method further comprises:
determining whether to read the information containing the specific function and the use method;
if yes, executing the step of entering the locking screen interface when reading the specific function and the use method displayed on the screen is completed; otherwise, executing the step of entering the locking screen interface after turning off the interface displaying the information.

According to an embodiment, the executing the step of entering the locking screen interface when reading the specific function and the use method displayed on the screen is completed is specifically:
the smart terminal detecting the locking event to lock its screen that is inputted again so as to confirm that the reading the specific function and the use method displayed on the screen is completed; and
entering the locking screen interface.

According to an embodiment, the step of responding to the locking event and displaying the information containing the specific function and the use method on the screen specifically comprises:
displaying the information containing a list of specific functions on the screen;
receiving and executing a selection command on the list;
displaying a brief introduction and use method of the specific function corresponding to the selection command on the screen.

To solve the above technical problem, yet another technical solution according to the present invention is as follows: a smart terminal is provided, comprising a detection module and a display module,
the display module is configured to respond to the locking event and display the information containing the specific function and the use method on the screen;
the display module is further configured to display the locking screen interface.

According to an embodiment, the display module is further configured to, prior to entering the locking screen interface, determine whether to read the specific function and the use method;
if yes, it enters the locking screen interface when reading the specific function and the use method displayed on the screen is completed; otherwise, displays the locking screen interface after turning off the interface displaying the information.

According to an embodiment, the display module is specifically configured to, when the detection module detects the locking event to lock its screen that is inputted again and confirms that the reading the specific function and the use method displayed on the screen is completed, display the locking screen interface.

According to an embodiment, the display module is specifically configured to display the information containing a list of specific functions on the screen, and after the detection module receives and executes a selection command on the list, display a brief introduction and use method of the specific function corresponding to the selection command on the screen.

According to an embodiment, the locking event comprises triggering the power button of the smart terminal.

Advantageous effects of the examples of the present invention are: unlike the prior art, the smart terminal of the present invention detects an inputted locking event to lock its screen, responds to the locking event and displays the information containing the specific function and the use method on the screen, and enters the locking screen interface when the information display is completed, which not only enables a user to easily acquire new function information of the smart terminal and improves the user experience, but also makes a full use of the locking screen background of the smart terminal and expands the functions of the smart terminal, thereby further improving the user experience.

The aforementioned characteristics, features and advantages of the invention as well as the way they are achieved will be further illustrated in connection with the following examples and considerations as discussed in view of the figures.
- Fig. 1: is a flow chart of an embodiment of the smart terminal information display method according to the present invention;
- Fig.2: illustrates an embodiment prior to the smart terminal detecting a locking screen event in the smart terminal information display method in Fig.1;
- Fig.3: illustrates an embodiment after the smart terminal detects a locking screen event in the smart terminal information display method in Fig.1;
- Fig.4: is a flow chart of another embodiment of the smart terminal information display method according to the present invention;
- Fig.5: illustrates an embodiment after the smart terminal detects a locking screen event in the smart terminal information display method in Fig.4;
- Fig.6: illustrates the structure of an embodiment of the smart terminal according to the present invention.

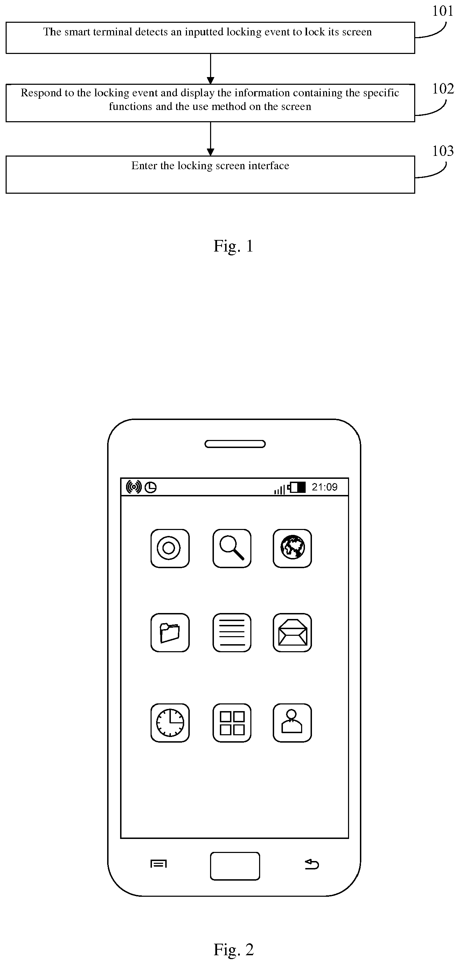

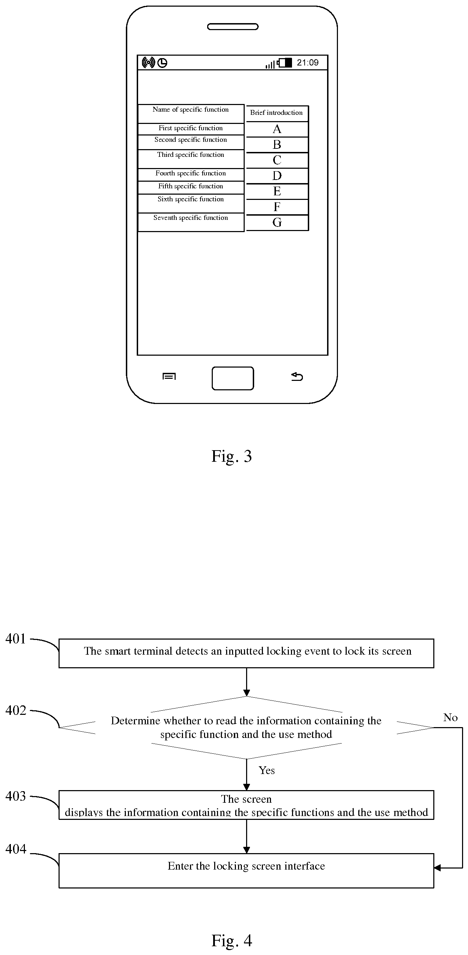

Referring to Fig.1, Fig.1 is a flow chart of an embodiment of the smart terminal information display method according to the present invention, and the smart terminal information display method of the present embodiment comprises:
101: the smart terminal detecting an inputted locking event to lock its screen;
   When a smart terminal runs in a normal state, the smart terminal is capable of responding to various operations of a user of the communication terminal, as shown in
   Fig.2, wherein the above normal state refers to a state prior to the screen locking and in which the smart terminal has been turned on.
   To enrich the display interface of the smart terminal, also to enable the presentation of a specific function of the smart terminal to the user without affecting the normal use of the smart terminal by the user, the present embodiment uses a locking screen event as the triggering event to display the specific function.
   Wherein, the specific function is an application run by the smart terminal or a function coming with the operating system, is a unique function relative to smart terminals of the models of the same brand but older than the model of the smart terminal in the present embodiment, and also includes relatively new functions compared with currently available smart terminals of other brands, such as start-up with fingerprints, standby or wakeup by double tapping on the touch screen or machine wakeup by voice, etc., which is not limited herein.
   Specifically, the smart terminal detects an inputted locking event to lock its screen. Wherein, the above locking event comprises triggering the power button of the smart terminal, and in other embodiments, the smart terminal may also use other screen locking ways as the triggering event, for example, locking the screen through a set button combination or function keys, which is not limited herein.
102: responding to the locking event and displaying the information containing the specific function and the use method on the screen.
   Upon receiving the locking event to lock its screen, the smart terminal does not enter the screen locking state immediately; instead, it responds to the above locking event and displays the information containing the specific function and the use method on the screen.
   Specifically, as shown in Fig.3, the smart terminal displays the information containing a list of specific functions on the screen. Wherein, the list comprises names and brief introductions of the specific functions, and each specific function may be selected through being clicked or in other ways. For example, when the second specific function in Fig.3 is selected, the smart terminal displays the brief introduction and use method of the second specific function corresponding to the selection command on its screen.
103: entering the locking screen interface.

After the smart terminal displays the information containing the specific function and the use method on the screen, it detects the locking event to lock its screen that is inputted again so as to confirm that the step of displaying the specific function and the use method on the screen has been completed, and then the smart terminal does not display the above information containing the specific function and the use method any more, but enters the locking screen interface directly.

Unlike the prior art, the smart terminal in the present embodiment detects an inputted locking event to lock its screen, responds to the locking event and displays the information containing the specific function and the use method on the screen, and enters the locking screen interface when the information display is completed, which not only enables a user to easily acquire the information of specific functions of the smart terminal and improves the user experience, but also makes a full use of the locking screen background of the smart terminal and expands the functions of the smart terminal, thereby further improving the user experience.

In another embodiment, the smart terminal may also detect an inputted unlocking event during unlocking, and does not directly enter the menu desktop after the corresponding unlocking event; instead, it displays the information containing the specific function and the use method on the screen. When the step of displaying the information containing the specific function and the use method on the screen by the smart terminal is completed, the smart terminal no longer displays the above information containing the specific function and the use method, but directly enters the menu interface and enters the work mode.

As shown in Fig.4, Fig.4 is a flow chart of another embodiment of the smart terminal information display method according to the present invention.

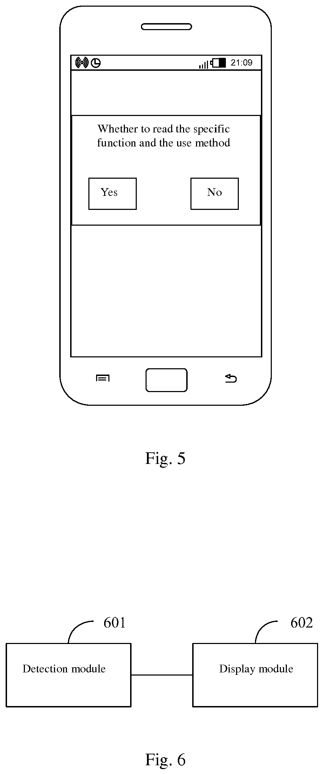

The smart terminal information display method according to the present embodiment comprises:
401: the smart terminal detecting an inputted locking event to lock its screen.
   To enrich the display interface of the smart terminal, also to enable the presentation of a specific function of the smart terminal to the user without affecting the normal use of the smart terminal by the user, the present embodiment uses a locking screen event as the triggering event to display the specific function.
   Specifically, the smart terminal detects an inputted locking event to lock its screen. Wherein, the above locking event comprises triggering the power button of the smart terminal, and in other embodiments, the smart terminal may also use other screen locking ways as the triggering event, for example, through a set button combination, etc.
   Wherein, the specific function is an application run by the smart terminal or a function coming with the operating system, is a unique function relative to smart terminals of older models, and also includes relatively new functions compared with currently available smart terminals of other brands, such as start-up with fingerprints, standby or wakeup by double tapping on the touch screen or machine wakeup by voice, etc., which is not limited herein.
402: determining whether to read the information containing the specific function and the use method.
   After the smart terminal detects an inputted locking event to lock its screen, a check box is popped up on its screen, wherein the box comprises whether to select reading the information containing the specific function and the use method thereof, as shown in Fig.5.
   Further, when the "yes" button is selected as shown in Fig.5, go to Step 403.
   If the "no" button is selected, go to Step 404.
403: the smart terminal displaying the information containing the specific function and the use method on the screen.
   Specifically, the smart terminal displays the information containing a list of specific functions on the screen. Wherein, the list comprises names and brief introductions of the specific functions, and each specific function may be selected through being clicked. When one of the specific functions is selected, the smart terminal receives and executes the above selection command on the list, and displays the brief introduction and use method of the specific function corresponding to the selection command on its screen.
   After the user reads the specific function and the use method displayed on the screen by the smart terminal, specifically, when the smart terminal detects the locking event to lock its screen that is inputted again so as to confirm that the reading the specific function and the use method displayed on the screen is completed, go to Step 404.
404: entering the locking screen interface.

To save limited electric resources and memory resources of the smart terminal, in addition, when the smart terminal detects the inputted locking event to lock its screen, the display of the information containing the specific function and the use method is not indefinite in time; instead, the display time is set, and when the smart terminal does not receive any command after a set time threshold has passed, it directly goes to Step 404 and no longer displays the information containing the specific function and the use method, but directly enters the locking screen interface, so as to save the power for the smart terminal.

In another embodiment, when the user completes reading the specific function and the use method displayed on the current screen, it may return to the interface of the information containing the list of specific functions such that the user can continue to read other specific functions and use methods, which is not limited herein.

Unlike the prior art, the smart terminal in the present embodiment detects an inputted locking event to lock its screen, displays the specific function and the use method of the smart terminal on the screen, and enters the locking screen interface when it is confirmed that the reading is completed, otherwise directly enters the locking screen interface. The above method not only enables a user to easily acquire the information of specific functions of the smart terminal and improves the user experience, but also makes a full use of the locking screen background of the smart terminal and expands the functions of the smart terminal, thereby further improving the user experience.

Unlike the previous embodiment, after the smart terminal detects an inputted locking event to lock its screen, a box whether to read the information containing the specific function and the use method is popped up for the user to select, which not only is more humanized, but also can save the memory resources and electric resources of the smart terminal. When the user does not process the above box within a preset time threshold, moreover, the smart terminal directly enters the locking screen interface, which further saves the memory resources and electric resources of the smart terminal, extends the life of the smart terminal, and makes it convenient for the user.

Referring to Fig.6, Fig.6 illustrates the structure of an embodiment of the smart terminal according to the present invention. The smart terminal according to the present invention comprises a detection module 601 and a display module 602.

The detection module 601 is configured for the smart terminal to detect the inputted locking event to lock its screen.

To enrich the display interface of the smart terminal, also to enable the presentation of a specific function of the smart terminal to the user without affecting the normal use of the smart terminal by the user, the present embodiment uses a locking screen event as the triggering event to display the specific function.

Specifically, the detection module 601 detects an inputted locking event to lock its screen. Wherein, the above locking event comprises triggering the power button of the smart terminal, and in other embodiments, the smart terminal may also use other screen locking ways as the triggering event, for example, through a set button combination, etc.

Wherein, the specific function is an application run by the smart terminal or a function coming with the operating system, is a unique function relative to smart terminals of older models, and also includes relatively new functions compared with currently available smart terminals of other brands, such as start-up with fingerprints, standby or wakeup by double tapping on the touch screen or machine wakeup by voice, etc., which is not limited herein.

The display module 602 is configured to display the information containing the specific function and the use method on the screen of the smart terminal.

When the detection module 601 receives the locking event to lock its screen, the display module 602 does not display the screen locking interface immediately; instead, it responds to the above locking event and displays the information containing the specific function and the use method on the screen.

Specifically, the smart terminal displays the information containing a list of specific functions on the screen. Wherein, the list comprises names and brief introductions of the specific functions, and each specific function may be selected through being clicked. When one of the specific functions is selected, the smart terminal receives and executes the above selection command on the list, and displays the brief introduction and use method of the specific function corresponding to the selection command on its screen.

The display module 602 is further configured to display the screen locking interface.

When the display module 602 displays the information containing the specific function and the use method on the screen, the detection module 602 continues to detect if there is a locking event inputted again, and when a locking event inputted again to lock its screen is detected, it determines that the function of displaying the specific function and the use method on the screen has been completed, then the display module 602 no longer displays the information containing the specific function and the use method, but directly displays the screen locking interface.

Unlike the prior art, after the detection module in the present embodiment detects an inputted locking event to lock its screen, the display module responds to the locking event and displays the information containing the specific function and the use method on the screen, and displays the locking screen interface when the information display is completed, which not only enables a user to easily acquire the information of specific functions of the smart terminal and improves the user experience, but also makes a full use of the locking screen background of the smart terminal and expands the functions of the smart terminal, thereby further improving the user experience.

In another embodiment, the detection module may also detect an inputted unlocking event during unlocking, and the display module does not directly enter the menu desktop after the corresponding unlocking event; instead, it displays the information containing the specific function and the use method on the screen. When the display of the information containing the specific function and the use method on the screen by the display module is completed, it no longer displays the above information containing the specific function and the use method, but directly displays the menu interface and the smart terminal enters the normal work mode.

In another embodiment, after the detection module detects an inputted locking event to lock the smart terminal, the display module pops up a check box on the screen of the smart terminal, wherein the box comprises whether to select reading the information containing the specific function and the use method thereof, such that the user selects whether to read the specific function and the use method of the smart terminal. If the command received by the smart terminal is Yes, then the display module displays the information containing the specific function and the use method on the screen of the smart terminal.

Specifically, the display module displays the information containing a list of specific functions on the screen of the smart terminal. Wherein, the list comprises names and brief introductions of the specific functions, and each specific function may be selected through being clicked. When one of the specific functions is selected, the detection module receives and executes the above selection command on the list, and the display module displays the brief introduction and use method of the specific function corresponding to the selection command on the screen of the smart terminal.

After the detection module detects the locking event to lock its screen that is inputted again, the display module confirms that the user completes reading the specific function and the use method displayed on the screen, and displays the locking screen interface.

If the command received by the smart terminal is No, then the display module directly displays the locking screen interface.

To save limited electric resources and memory resources of the smart terminal, in addition, when the detection module detects the inputted locking event to lock its screen, the display module does not display the information containing the specific function and the use method indefinitely in terms of time, but sets a display time, and when the smart terminal does not receive any command after a set time threshold has passed, the display module displays the locking screen interface, so as to save the power for the smart terminal.

In another embodiment, when the user completes reading the specific function and the use method displayed on the current screen, the display module may return to the interface of the information containing the list of specific functions such that the user can continue to read other specific functions and use methods, which is not limited herein.

Unlike the prior art, after the detection module of the smart terminal in the present embodiment detects an inputted locking event to lock its screen, the display module displays the specific function and the use method of the smart terminal on the screen, and displays the locking screen interface when it is confirmed that the reading is completed, otherwise directly displays the locking screen interface. The above method not only enables a user to easily acquire the information of specific functions of the smart terminal and improves the user experience, but also makes a full use of the locking screen background of the smart terminal and expands the functions of the smart terminal, thereby further improving the user experience.

Unlike the previous embodiment, after the detection module of the smart terminal detects an inputted locking event to lock the screen of the smart terminal, the display module pops up a box whether to read the information containing the specific function and the use method for the user to select, which not only is more humanized, but also can save the memory resources and electric resources of the smart terminal. When the smart terminal does not process the above box within a preset time threshold, moreover, the display module directly displays the locking screen interface, which further saves the memory resources and electric resources of the smart terminal, extends the life of the smart terminal, and makes it convenient for the user.

Only embodiments of the present invention are described above, which do not intend to limit the scope of the present invention. Any equivalent structure or equivalent procedure variation made according to the Specification and Drawings of the present invention, or direct or indirect applications in other related technical fields, shall similarly be encompassed by the present invention.

## Claims

1. A smart terminal information display method, comprising
- the smart terminal detecting an inputted locking event to lock its screen (101; 401);
- responding to the locking event and displaying the information containing a list of specific functions on the screen (102);
- receiving and executing a selection command on the list;
- displaying a brief introduction and use method of the specific function corresponding to the selection command on the screen;
- determining whether to display the information containing the specific function and the use method (402); if yes (403), entering the locking screen interface when displaying the specific function and the use method displayed on the screen is completed; otherwise, turning off the interface displaying the information and entering the locking screen (103; 404).

2. The method according to claim 1, wherein the step of entering the locking screen interface when reading the specific function and the use method displayed on the screen is completed is specifically:
- the smart terminal detecting the locking event to lock its screen that is inputted again so as to confirm that the reading the specific function and the use method displayed on the screen is completed; and
- entering the locking screen interface.

3. The method according to any of the preceding claims, wherein the locking event comprises triggering the power button of the smart terminal.

4. A smart terminal, comprising a detection module (601) and a display module (602),
- the detection module (601) is configured to detect an inputted locking event to lock its screen;
- the display module (602) is configured to respond to the locking event and display information containing a specific function and a use method on the screen;
- the display module (602) is further configured to display the locking screen interface,
wherein
- the display module (602) is further configured to, prior to entering the locking screen interface, determine whether to display the specific function and the use method;
- if yes, the display module (602) is configured to enter the locking screen interface when displaying the specific function and the use method displayed on the screen is completed; otherwise, the display module (602) is configured to display the locking screen interface after turning off the interface displaying the information, and
- wherein the display module (602) is specifically configured to display the information containing a list of specific functions on the screen, and after the detection module receives and executes a selection command on the list, display a brief introduction and use method of the specific function corresponding to the selection command on the screen.

5. The smart terminal according to claim 4, wherein the display module (602) is specifically configured to, when the detection module (601) detects the locking event to lock its screen that is inputted again and confirms that the displaying the specific function and the use method displayed on the screen is completed, display the locking screen interface.

6. The smart terminal according to any of claims 4 to 5, wherein the locking event comprises triggering the power button of the smart terminal.

## Patentansprüche

1. Verfahren zum Anzeigen von Information an einem intelligenten Endgerät, das Folgendes umfasst:
- Detektieren, durch das intelligente Endgerät eines eingegebenen Sperrereignisses zum Sperren seines Bildschirms (101; 401);
- Antworten auf das Sperrereignis und Anzeigen der Information, die eine Liste spezifischer Funktionen enthält, auf dem Bildschirm (102);
- Empfangen und Ausführen eines Auswahlbefehls bezüglich der Liste;
- Anzeigen einer kurzen Einführung und eines Verwendungsverfahrens der spezifischen Funktion, die dem Auswahlbefehl entspricht, auf dem Bildschirm;
- Bestimmen, ob die Information, die die spezifische Funktion und das Verwendungsverfahren enthält, angezeigt werden soll (402); falls ja (403), Eintreten in die Sperrbildschirm-Schnittstelle, wenn das Anzeigen der spezifischen Funktion und des Verwendungsverfahrens, die auf dem Bildschirm angezeigt werden, abgeschlossen ist; andernfalls Ausschalten der Schnittstelle, die die Information anzeigt, und Eintreten in den Sperrbildschirm (103; 404).

2. Verfahren nach Anspruch 1, wobei der Schritt des Eintretens in die Sperrbildschirm-Schnittstelle, wenn das Lesen der spezifischen Funktion und des Verwendungsverfahrens, die auf dem Bildschirm angezeigt werden, abgeschlossen ist, Folgendes umfasst:
- Detektieren durch das intelligente Endgerät, ob das Sperrereignis zum Sperren seines Bildschirms erneut eingegeben wird, um zu bestätigen, dass das Lesen der spezifischen Funktion und des Verwendungsverfahrens, die auf dem Bildschirm angezeigt werden, abgeschlossen ist; und
- Eintreten in die Sperrbildschirm-Schnittstelle.

3. Verfahren nach einem der vorhergehenden Ansprüche, wobei das Sperrereignis ein Auslösen des Einschaltknopfs des intelligenten Endgeräts umfasst.

4. Intelligentes Endgerät, das ein Detektionsmodul (601) und ein Anzeigemodul (602) umfasst,
- wobei das Detektionsmodul (601) konfiguriert ist, ein eingegebenes Sperrereignis zum Sperren seines Bildschirms zu detektieren;
- das Anzeigemodul (602) konfiguriert ist, auf das Sperrereignis zu reagieren und Information, die eine spezifische Funktion und ein Verwendungsverfahren enthält, auf dem Bildschirm anzuzeigen;
- das Anzeigemodul (602) ferner konfiguriert ist, die Sperrbildschirm-Schnittstelle anzuzeigen,
wobei
- das Anzeigemodul (602) ferner konfiguriert ist, vor dem Eintreten in die Sperrbildschirm-Schnittstelle zu bestimmen, ob die spezifische Funktion und das Verwendungsverfahren angezeigt werden sollen;
- falls ja, das Anzeigemodul (602) konfiguriert ist, in die Sperrbildschirm-Schnittstelle einzutreten, wenn das Anzeigen der spezifischen Funktion und des Verwendungsverfahrens, die auf dem Bildschirm angezeigt werden, abgeschlossen ist; andernfalls das Anzeigemodul (602) konfiguriert ist, die Sperrbildschirm-Schnittstelle anzuzeigen, nachdem die Schnittstelle, die die Information anzeigt, ausgeschaltet worden ist, und
- wobei das Anzeigemodul (602) konfiguriert ist, die Information, die eine Liste spezifischer Funktionen enthält, auf dem Bildschirm anzuzeigen, und, nachdem das Detektionsmodul einen Auswahlbefehl bezüglich der Liste empfangen und ausgeführt hat, eine kurze Einführung und ein Verwendungsverfahren der spezifischen Funktion, die dem Auswahlbefehl entspricht, auf dem Bildschirm anzuzeigen.

5. Intelligentes Endgerät nach Anspruch 4, wobei das Anzeigemodul (602) konfiguriert ist, dann, wenn das Detektionsmodul (601) das Sperrereignis zum Sperren seines Bildschirms, das erneut eingegeben wird, detektiert und bestätigt, dass das Anzeigen der spezifischen Funktion und des Verwendungsverfahrens, die auf dem Bildschirm angezeigt werden, abgeschlossen ist, die Sperrbildschirm-Schnittstelle anzuzeigen.

6. Intelligentes Endgerät nach einem der Ansprüche 4 bis 5, wobei das Sperrereignis das Auslösen des Einschaltknopfes des intelligenten Endgeräts umfasst.

## Revendications

1. Procédé d'affichage d'informations de terminal intelligent, comprenant les étapes suivantes :
- le terminal intelligent détecte un événement de verrouillage entré pour verrouiller son écran (101 ; 401) ;
- répondre à l'événement de verrouillage et afficher les informations contenant une liste de fonctions spécifiques à l'écran (102) ;
- recevoir et exécuter une commande de sélection dans la liste ;
- afficher une brève introduction et un procédé d'utilisation de la fonction spécifique correspondant à la commande de sélection à l'écran ;
- déterminer s'il convient d'afficher les informations contenant la fonction spécifique et le procédé d'utilisation (402) ; si tel est le cas (403), entrer dans l'interface de l'écran de verrouillage lorsque l'affichage de la fonction spécifique et du procédé d'utilisation affiché à l'écran est terminé ; sinon, désactiver l'interface affichant les informations et entrer dans l'écran de verrouillage (103 ; 404).

2. Procédé selon la revendication 1, dans lequel l'étape comprenant d'entrer dans l'interface de l'écran de verrouillage lorsque la lecture de la fonction spécifique et du procédé d'utilisation affiché à l'écran est terminée comprend spécifiquement les étapes suivantes :
- le terminal intelligent détecte l'événement de verrouillage pour verrouiller son écran qui est de nouveau accédé afin de confirmer que la lecture de la fonction spécifique et du procédé d'utilisation affiché à l'écran est terminée ; et
- entrer dans l'interface de l'écran de verrouillage.

3. Procédé selon l'une quelconque des revendications précédentes, dans lequel l'événement de verrouillage comprend le déclenchement du bouton de mise sous tension du terminal intelligent.

4. Terminal intelligent, comprenant un module de détection (601) et un module d'affichage (602),
- le module de détection (601) étant configuré pour détecter un événement de verrouillage entré pour verrouiller son écran ;
- le module d'affichage (602) étant configuré pour répondre à l'événement de verrouillage et afficher à l'écran des informations contenant une fonction spécifique et un procédé d'utilisation ;
- le module d'affichage (602) étant en outre configuré pour afficher l'interface de l'écran de verrouillage, où
- le module d'affichage (602) est en outre configuré pour, avant d'accéder à l'interface de l'écran de verrouillage, déterminer si la fonction spécifique et le procédé d'utilisation doivent être affichés ;
- si tel est le cas, le module d'affichage (602) est configuré pour entrer dans l'interface de l'écran de verrouillage lorsque l'affichage de la fonction spécifique et du procédé d'utilisation affiché à l'écran est terminé ; sinon, le module d'affichage (602) est configuré pour afficher l'interface de l'écran de verrouillage après avoir désactivé l'interface affichant les informations, et
- où le module d'affichage (602) est spécifiquement configuré pour afficher les informations contenant une liste de fonctions spécifiques à l'écran et, après que le module de détection a reçu et a exécuté une commande de sélection sur la liste, afficher une brève introduction et utiliser le procédé d'utilisation de la fonction spécifique correspondant à la commande de sélection à l'écran.

5. Terminal intelligent selon la revendication 4, dans lequel le module d'affichage (602) est spécifiquement configuré pour, lorsque le module de détection (601) détecte que l'événement de verrouillage pour verrouiller son écran est entré à nouveau et confirme que l'affichage de la fonction spécifique et du procédé d'utilisation affiché à l'écran est terminé, afficher l'interface de verrouillage d'écran.

6. Terminal intelligent selon l'une quelconque des revendications 4 à 5, dans lequel l'événement de verrouillage comprend le déclenchement du bouton de mise sous tension du terminal intelligent.
